# EUROPEAN PATENT APPLICATION

(11) **EP 2 390 207 A1**
(43) Date of publication of application: **30.11.2011**
(21) Application number: 10163777.5
(22) Date of filing: 25.05.2010
(51) Int. Cl.: B65G 69/00

(54) **Transport vehicles strapped to loading docks**

(71) Applicant: Deutsche Post AG, 53113 Bonn (DE)
(72) Inventor: Tuominen, Joni Eerik Herman, 20210 Turku (FI)
(74) Representative: Jostarndt, Hans-Dieter

(57) **Abstract**

The invention relates to a strapping system for multiple types of transport vehicles (1) at loading docks (2) applicable to multiple types of transport vehicles (1) enabling to assist the positioning of the transport vehicle (1) and to fix the transport vehicle (1) in front of a loading dock (2). The strapping system comprises at least one coupler (3) suitable to be imposed on at least one suitable component (11) of the transport vehicles (1), wherein the coupler (3) is connected to a pulling tool (4) for pulling (P) the coupler (3) to assist the positioning of the transport vehicles (1) at the loading dock (2) and to fix (F) the transport vehicle (1) at a certain position in front of the loading dock (2). The invention further relates to a method to strap a transport vehicle (1) at a loading dock (2).

## Description

### Field of the invention

The invention relates to a strapping system for transport vehicles at loading docks. The invention further relates to a method to apply the strapping system.

### Background of the invention

Transport vehicles, e.g. trailers, are loaded with objects to be transported at loading docks. The loading dock comprises a loading platform with an upper surface approximately at the height of the base of the transport vehicle to be loaded with objects. Commonly the objects are loaded to the transport vehicle with forklifts driving from the loading platform into the transport vehicle. Therefore it must be avoided that transport vehicles are able to move or slide away from the loading platform to prevent accidents during loading the transport vehicle. A common method to prevent accidents is to place wheel chocks under the wheel of the transport vehicle. However this measure is not very effective during winter season, where wheel chocks may slide on icy grounds (e.g. asphalt) under the wheels of the transport vehicles. Alternatively the transport vehicles are fixed to the loading dock via straps, which get brittle over time and may get broken. Additionally such broken straps often litter the front of the loading docks causing a hazard itself. If the straps are equipped with hooks in order to catch the transport vehicle, it is often very difficult to attach a hook to a transport vehicle because the transport vehicles often miss holes for attach a hook.

Document WO 2009/005931 discloses a yieldable brace for a vehicle at a loading dock, where the brace is mounted directly at the loading dock and holds the truck stationary directly in front of the loading dock. The brace applies a reactive force upwards against the trailers rear bumper to resist trailers movement secured by an additional hook fixing the rear bumper from the lower side. To be able to apply the yieldable brace, the truck has to be driven about a few centimeters in front of the loading docks requiring a very accurate positioning of the trailer, which is time consuming. Positioning failures may result in damages of the loading docks and/or the trailer. It is a further disadvantage that the yieldable brake cannot assist the positioning of the trailer. Furthermore the yieldable brake is only applicable in case of trailers having a rear bumper at the position, where the brace and the hook are installed. The brace is not compatible to be mounted flexible to other parts of the trailer in case of missing suitable parts at the location of the brace and hook.

### Summary of the invention

It is an object of the present invention to solve the disadvantages of the prior art. In particular it is an object to provide a strapping system applicable to multiple types of transport vehicles enabling to assist the positioning of the transport vehicle and to fix the transport vehicle in front of a loading dock.

The object is solved by a strapping system for multiple types of transport vehicles at loading docks comprising at least one coupler suitable to be imposed on at least one suitable component of the transport vehicle, wherein the coupler is connected to a pulling tool mounted to the loading dock for pulling the coupler to assist the positioning of the transport vehicle at the loading dock and to fix the transport vehicle at a certain position in front of the loading dock.

The strapping system for transport vehicles denotes a system, where transport vehicles are fixed to the loading docks in order to prevent any non-desired movements of the transport vehicles during loading / unloading the transport vehicle. Since the loading process utilizes forklifts applying mechanical forces to the transport vehicle, the fixation of the transport vehicle is necessary. The term "transport vehicle" denotes any kind of wheel based vehicles suitable to be loaded at loading docks. The vehicles are suitable to transport objects on common streets or highways. As an example, transport vehicles are trucks and/or trailers. The trailer may be a so-called semi-trailer without a front axis supported by a road tractor establishing a semi-trailer truck. The objects to be transported by the transport vehicle may be any kind of objects.

The coupler denotes a device suitable to be connected to the transport vehicle at a part

(component) of the transport vehicle with is either dedicated for being connected with the coupler or is not originally indented to but suitable to be connected with the coupler providing a strapping system applicable to different types of transport vehicles providing a large variability for using the system. The connection between transport vehicle and coupler is established by imposing the coupler on top of the suitable component of the transport vehicle in contrast to prior art, e.g. to hooks holding a transport vehicle from the bottom side of a rear bumper. A coupler to be imposed on a component is easier to be handled by workers and will result in a faster positioning and fixation of the transport vehicle at the loading dock. The coupler has an inner side facing towards the suitable component of the transport vehicle and an outer side facing away from the suitable component of the transport vehicle. The term "imposed on" denotes the attaching of the coupler to the suitable component from the top side of the suitable component resulting in a coupler attached to this component, which inner side at least partly encompasses this component, preferably at least to more than 50% of its circumference. The coupler may be made of any sufficiently rigid material, e.g. metal, steel or hard plastic. Depending on the coupler and the transport vehicle to be fixed, there may be one or more coupler (e.g. two couplers) imposed on a component of the transport vehicles. The coupler according to the present invention does not require any counterparts of the transport vehicle to be especially designed for attaching the coupler. Therefore the strapping system provides a large flexibility to be used for different types of transport vehicles.

To fix the transport vehicle at a certain position in front of the loading dock, the coupler is connected to a pulling tool. Simultaneously the pulling tool assists the positioning of the transport vehicle at loading dock by pulling the transport vehicle towards the loading docks in a controlled way determined by the pulling force applied by of the pulling tool and by the relative position of the coupler with respect to the pulling tool. This pulling force is the main pulling force applied in a direction vertical to the loading dock. If the transport vehicle is not exactly in the desired position, there may be a component of the pulling force applied parallel to the loading dock to the transport vehicle if the coupler connected to the pulling tool is attached to the transport vehicle somewhere outside the vertical pulling axis of the pulling tool relative to the front side of the loading dock. The pulling tool may be any tool suitable to apply a sufficient force to pull a transport vehicle, which may have weights up to several tons, towards a loading dock. The weight of trailers and/or trucks may vary between 5 tone and 40 tons or more. The connection between coupler and pulling tool may be established for example by a chain, a strap, a cable, a rack and pinion or any other suitable connection means. The distance, from which the transport vehicle is pulled towards the loading dock, may vary between a few tens of centimeters and a few meters.

A loading dock denotes any platform, which is suitable to load / unload transport vehicles without the need of lifts, ladders or stairs. Therefore the platform (upper surface of the loading dock) is approximately on the same level of height as the loadable base of the transport vehicle in order to transfer objects in an essentially horizontal direction into the transport vehicle. The commonly vertical front side of the loading dock facing towards the transport vehicle provides suitable space to mount the pulling tool to the loading dock. Alternatively, the pulling tool may be mounted on the driving area in front of the loading dock close to the loading dock, e.g. with distances to the front side of the loading docks of a few tens of centimeters.

In an embodiment the suitable component of the transport vehicle is the rear bumper, the rear suspension or the rear axle of the transport vehicle. These components are easily accessible for workers supporting the positioning and fixation of transport vehicle at loading docks to impose the coupler on the components. The application of only one coupler requires a component, which has a certain extension parallel to the rear side of the transport vehicle such as a rear bumper or a rear axle extending from one side of the transport vehicle to its other side. The coupler can be imposed to such a suitable component at the right position to pull the transport vehicle (a) exactly in a direction vertical to the front side of the loading dock if imposed at a position at the middle axis between both sides of the transport vehicle, or (b) towards the loading dock and simultaneously slightly parallel to the loading dock if imposed to the suitable component closer to one of the sides of the transport vehicles. The side of the transport vehicle denotes the side, which is aligned essentially vertical to the loading dock. The coupler has a suitable shape to be imposed on such kind of components.

In another embodiment the coupler is a cap with an open base to be imposed on the suitable component of the transport vehicle. Such a cap can be imposed on of the suitable component from the top side with just one motion. In a preferred embodiment the cap has a U-shape with open sides. The U-shape of the cap provides a secure fit of the coupler. The open sides enable workers to align the couplet to a certain position at the suitable component after imposing the coupler on this component. In another preferred embodiment the inner side of the cap facing towards the suitable component of the transport vehicle is made of an elastic material, preferably rubber, in order to improve the tight fit of the coupler and/or to prevent any damages to the component of the transport vehicle caused by pulling and/or fixing the transport vehicle.

In another embodiment the coupler comprises a locking means in order to fix the coupler to the suitable component of the transport vehicle. The locking means prevents the coupler from slipping off the component, where the coupler is fixed to. The locking means might be a latch to close the open base of the coupler or might be a clamping means to fix the coupler. The clamping might be achieved by decreasing the width of the coupler in order to clamp the component inside the coupler. In a preferred embodiment the locking means is suitable to adapt the size of the coupler to the sizes of the suitable components of multiple transport vehicles. An adaptable coupler is usable for different types of transport vehicles enabling a variable loading process at a certain loading dock regardless of the type of transport vehicles. An adaptable size of the coupler can be achieved with a coupler comprising two legs connected together with a variable element, e.g. a screw, a hinge, a guide rail, with can be fixed at different positions. This kind of fixation may be executed e.g. by bolts or screws.

In another embodiment the pulling tool is a winch or a pulling jack, preferably a cable winch, a rack and pinion jack, a hydraulic jack or a chain jack. Winches are commonly used to carry or move heavy objects. As an example cable winches is commonly used to pull vehicles for a certain distance. All theses winches are able to apply a sufficient force to the transport vehicle to pull and fix it to the loading dock. Cable or chain winches are applicable easily and cheap. However winches with cables or chains allow slight movements of the transport vehicle, when the cables or chains vary between being taut and being not taut. A rack and pinion jack is able to fix the transport vehicle in a permanent position without any possible slight movements, because the transport vehicle is connected to the loading dock via a non-flexible massive bar. In a preferred embodiment the winch comprises an inbuilt brake to fix the transport vehicle at a certain position. With an inbuilt break, the fixation of the transport vehicle can be realized very simple. Additionally the release of the transport vehicle after completed loading / unloading is achieved by simply releasing the break and detaching the coupler. A possible inbuilt brake for a rack and pinion jack could be a fixation means for pinion, e.g. a fixing brake installed to the pinion.

In another embodiment the pulling tool comprises a sliding bar mounted to the loading dock, two arms mounted to at least one coupler at the first end of each of the arms and to the sliding bar at the second end of each of the arms and an arrangement suitable move the second ends of the arms along the sliding bar in order to pull the transport vehicle towards the loading dock. This embodiment is suitable to fix the transport vehicle in a permanent position without any possible slight movements, because the transport vehicle is connected to the loading dock via two non-flexible massive arms (or bars). The sliding bar may be a cylindrical bar and the second end of the arms may be arranged as sleeves fitting over the sliding bar. The pulling of the transport vehicle may be achieved by moving the second ends of the arms along the sliding bar with a suitable arrangement (or driver), e.g. a hydraulic driver to move the arms. In another embodiment the sliding bar and/or at least one second end of one of the arms comprise suitable holding means to fix the transport vehicle at a certain position. Such holding means be by screws, clamps or bolts, which are applicable easily and fast and which provide as tight fixation to the arms in a desired position. In another referred embodiment the two arms cross each other and the transport vehicle is fixed at a certain position by at least one linking means fixing the crossing position of the arms in a certain position. The fixation can be achieved by a cap with an open base shaped as a cross with a certain angel between the legs of the cross to be put on top of the crossing part of the arms. The cap will fix the crossed arms in the position determined by the shape of the cap. This kind of fixation tool is very easy to handle and will provide a tight fixation to the arms in a desired position. In alternative embodiments, the first ends of the arms are mounted to separate couplers each, meaning that two couplers have to be fixed to the suitable component of the transport vehicle.

The invention further relates to a method to strap a transport vehicle at a loading dock with a strapping system as claimed in the present invention comprising the steps of
- driving the transport vehicle close to the loading dock,
- imposing a coupler on at least one suitable component of the transport vehicle,
- pulling the transport vehicle to the loading dock with a pulling tool connected to the coupler to assist the positioning of the transport vehicle at the loading dock, and
- fixing the transport vehicle at a certain position in front of the loading dock.

In an embodiment of the method the step of fixing the transport vehicle comprises fixing an inbuilt brake of the pulling tool or applying a holding means or linking means to the pulling tool.

In another embodiment the method further comprising the steps of
- releasing the fixed transport vehicle, and
- removing the coupler from the suitable component of the transport vehicle.

The fixation might be achieved by applying an inbuilt brake. Subsequently the release of the transport vehicle is simply achieved by releasing the brake.

### Brief description of the drawings

These and other aspects of the invention will be apparent from and elucidated with reference to the embodiments described hereinafter.
- Fig.1:: (a) transport vehicle pulled to a loading dock, and (b) transport vehicle fixed to a loading dock with a strapping system according to the present invention.
- Fig.2:: a first embodiment of the pulling tool and the connected coupler.
- Fig.3:: a second embodiment of the pulling tool and the connected coupler.
- Fig.4:: a third embodiment of the pulling tool and the connected coupler.

### Detailed description of embodiments

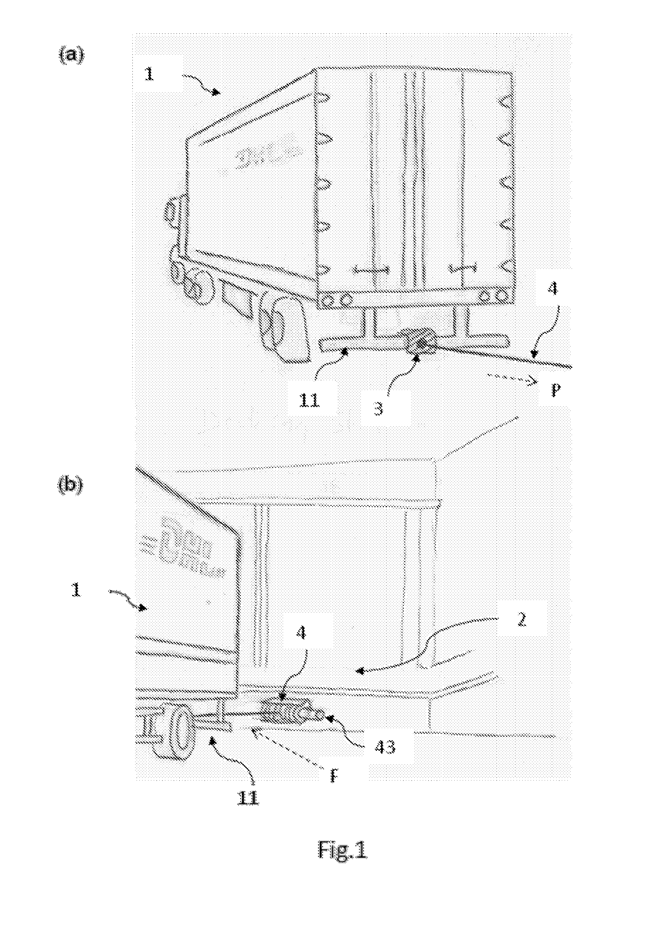

Fig.1 shows (a) a transport vehicle 1 pulled to a loading dock 2, and (b) the same transport vehicle 1 fixed to the loading dock 2 with a strapping system according to the present invention after positioning of the transport vehicle 1 by pulling P (indicated by the dashed arrow) the transport vehicle 1 in front of the loading dock 2. In part (a) the coupler 3 is imposed on the rear bumper 11 as the suitable component of the transport vehicle 1 to attach the coupler 3. A cable winch mounted to the loading dock 2 as the pulling tool 4 is connected via the cable of the cable winch to the coupler 3. In part (b) the transport vehicle 1 is fixed F in the desired position in front of the loading dock 2 by locking the winch in this position, e.g. by applying an inbuilt brake 43 of the winch.

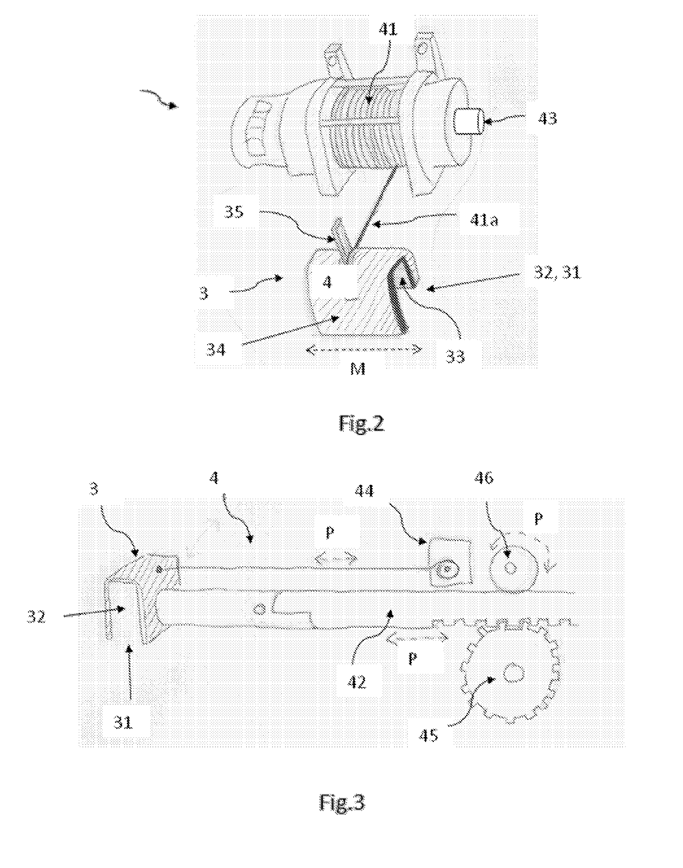

Fig. 2 shows a first embodiment of the strapping system in more details. Here the pulling tool 4 is a cable winch 41 with a cable 41a and an inbuilt brake 43. The coupler 3 is connected to the cable winch 41 with the cable 41 a of the cable winch, where the cable is considered as part of the pulling tool 4. The same holds for other winches applying chain etc. The cable 41a may be welded to the coupler 3 or may be fixed to the coupler 3 with a bolt. People skilled in the art may chose other means to connect the pulling tool 4, especially the cable 41a, to the coupler 3. The coupler 3 comprises an inner side 33 facing towards the suitable component 11 of the transport vehicle when attached to the suitable component 11 and a corresponding outer side 34 facing to the opposite direction. The coupler is imposed on the suitable component 11 via is open base 31 and may be move along the suitable component 11 via the open sides 32 to its desired position as indicated by the dashed arrow M. The inner side 33 is equipped with a layer of rubber or any other smooth and/or elastic material in order to avoid any damage to the suitable component 11 of the transport vehicle 1 caused by pulling P and fixing F the transport vehicle 1 with the strapping system according to the present invention and/or to provide a tight fit of the coupler 3 to the suitable component 11. The coupler 3 additionally comprises a locking means 35 to fix the coupler 3 to a rear bumper 11 or other suitable components of the transport vehicle 1. The locking means 35 is arranged as a lever to be pulled in order to decrease the width of the open base 31 of the coupler 3. Subsequently the coupler 3 is clamped to the rear bumper 11 additionally supported by the slight deformation of the inner side 33 of the coupler 3 made of rubber further increasing the friction force on the rear bumper 11.

Fig.3 shows a second embodiment of the pulling tool 4 and the connected coupler 3. Here the pulling tool 4 mounted to the loading dock 2 is arranged as a rack and pinion jack 42 providing a massive non-flexible connection to the coupler 3 arranged on the front side of the rack and pinion jack 42. With such rack and pinion jack 42, the transport vehicle 1 can be hold in a fixed position avoiding any slight movement of the transport vehicle 1 during the loading process of the transport vehicle 1. The pulling P may be executed by a cable motor 44 and a cable connected to the coupler 3 pulling the rack and pinion jack 42 towards the loading dock 2. Alternatively, the pulling P may be executed by a wheel motor 46, where a driven wheel rolls along the surface of the rack and pinion jack 42. Furthermore a motor driven pinion 45 may pull the rack and pinion jack 42 towards the loading dock 2. The coupler 3 is fixed to the transport vehicle 1 by imposing the open base 31 on a suitable component 11 of the transport vehicle 1. The open sides 32 of the coupler allow sliding the coupler 3 along the suitable component 11 on demand.

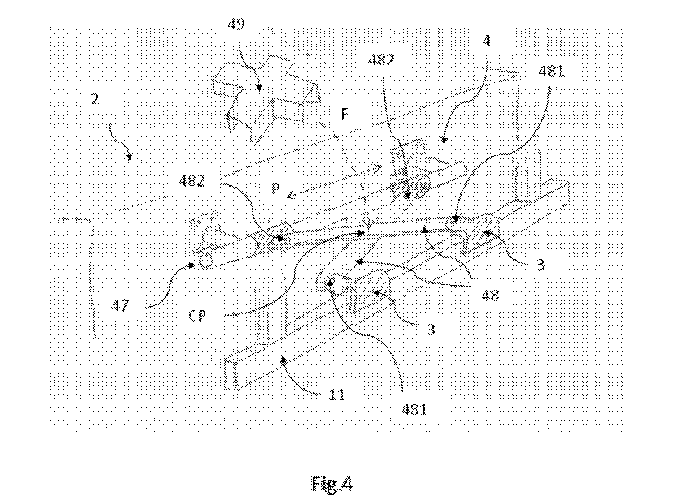

Fig.4 shows a third embodiment of the pulling tool 4 and the connected coupler 3, where the pulling tool 4 comprises a sliding bar 47 mounted to the loading dock 2, e.g. made of metal. Two arms 48 are mounted to one coupler 3 at each of the first ends 481 of each of the arms 48 and to the sliding bar 47 at the second ends 482 of each of the arms 48. The arms may be also made of metal. To apply a pulling force to the transport vehicle 1 (schematically shown here as a rear bumper 11) an arrangement (not shown here) moves P (= pulling) the second ends 482, here arranged as sliding sleeves, of the arms 48 along the sliding bar 47 in order to pull the transport vehicle 1 towards the loading dock 2. In order to fix the transport vehicle 1 in a certain position in front of the loading dock 2 the two crossing arms 48 are fixing at the crossing position CP of the arms 48 with a linking means 49. The linking means 49 is shaped to fit over the crossed arms 48 at a certain angle between the arms 48. Therefore the linking means 49 is shaped as a cross with a predefined angel between the legs of the cross. The linking means 49 has an open base to be easily imposed on the crossed arms from the top side. Therefore the linking means 49 are self-locked to the arms. The strapping system in this embodiment comprises two couplers 3, where one coupler 3 is attached to each of the arms 48. The two couplers 3 may be fixed to a certain position at the rear bumper 11 or may be allowed to slide along the rear bumper 11. In alternative embodiments, both arms may be mounted to one coupler 3. For the pulling P of the transport vehicles 1, the same scheme as shown in figure 4 applies as well. However, the arms 48 (not crossing in this embodiment) have to be locked differently, e.g. with holding means (not shown here) such as screws or bolts attached to the second sides 482 of the arms 48 sliding along the sliding bar 47. To provide a robust strapping system all parts shown in figure 4 may be made of metal.

While the invention has been illustrated and described in details in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference sign in the claims should not be construed as limiting the scope.

### List of reference

- 1: transport vehicle
- 11: component of the transport vehicle suitable for the coupler to be imposed on
- 2: loading dock
- 3: coupler
- 31: open base of the coupler
- 32: open sides of the coupler
- 33: inner side of the coupler
- 34: outer side of the coupler
- 35: locking means of the coupler
- 4: pulling tool
- 41: cable winch
- 42: rack and pinion jack
- 43: inbuilt brake
- 44: cable motor
- 45: pinion wheel
- 46: wheel motor
- 47: sliding bar
- 48: arms to connect coupler to sliding bar
- 481: first end of the arm
- 482: second end of the arm
- 49: lining means

- F: fixing the transport vehicle
- P: pulling the transport vehicle
- CP: crossing position of the arms
- M: moving the coupler along the suitable component

## Claims

1. A strapping system for multiple types of transport vehicles (1) at loading docks (2) comprising at least one coupler (3) suitable to be imposed on at least one suitable component (11) of the transport vehicles (1), wherein the coupler (3) is connected to a pulling tool (4) mounted to the loading dock (2) for pulling (P) the coupler (3) to assist the positioning of the transport vehicles (1) at the loading dock (2) and to fix (F) the transport vehicle (1) at a certain position in front of the loading dock (2).

2. The strapping system as claimed in claim 1, **characterized in that** the suitable component (11) of the transport vehicle (1) is the rear bumper, the rear suspension or the rear axle of the transport vehicle (1).

3. The strapping system as claimed in claim 1 or 2, **characterized in that** the coupler (3) is a cap with an open base (31) to be imposed on the suitable component (11) of the transport vehicle (1).

4. The strapping system as claimed in claim 3, **characterized in that** the cap (3) has a U-shape with open sides (32).

5. The strapping system as claimed in claims 3 or 4, **characterized in that** the inner side (33) of the cap (3) facing towards the suitable component (11) of the transport vehicle (1) is made of an elastic material, preferably rubber.

6. The strapping system as claimed in any of the preceding claims, **characterized in that** the coupler (3) comprises a locking means (35) in order to fix the coupler (3) to the suitable component (11) of the transport vehicle (1).

7. The strapping system as claimed in claim 7, **characterized in that** the locking means (35) is suitable to adapt the size of the coupler (3) to the sizes of the suitable components (11) of multiple transport vehicles (1).

8. The strapping system as claimed in any of the preceding claims, **characterized in that** the pulling tool (4) is a winch or a pulling jack, preferably a cable winch (41), a rack and pinion jack (42), a hydraulic jack or a chain jack.

9. The strapping system as claimed in claim 8, **characterized in that** the winch (4) comprises an inbuilt brake (43) to fix the transport vehicle (1) at a certain position.

10. The strapping system as claimed in any of the claim 1 to 7, **characterized in that** the pulling tool (4) comprises a sliding bar (47) mounted to the loading dock (2), two arms (48) mounted to at least one coupler (3) at the first ends (481) of each of the arms (48) and to the sliding bar (47) at the second ends (482) of each of the arms (48) and an arrangement suitable move the second ends (482) of the arms (48) along the sliding bar (47) in order to pull the transport vehicle (1) towards the loading dock (2).

11. The strapping system as claimed in claim 10, **characterized in that** the sliding bar (47) and/or at least one second end (482) of one of the arms (48) comprise suitable holding means to fix the transport vehicle (1) at a certain position.

12. The strapping system as claimed in claim 10 or 11, **characterized in that** the two arms (48) cross each other and the transport vehicle (1) is fixed at a certain position by at least one linking means (49) fixing the crossing position (CP) of the arms (48) in a certain position.

13. A method to strap a transport vehicle at a loading dock with a strapping system as claimed in claim 1 comprising the steps of
- driving the transport vehicle (1) close to the loading dock (2),
- imposing a coupler (3) on at least one suitable component (11) of the transport vehicle (1),
- pulling (P) the transport vehicle (1) to the loading dock (2) with a pulling tool (4) connected to the coupler (3) to assist the positioning of the transport vehicle (1) at the loading dock (2), and
- fixing (F) the transport vehicle (1) at a certain position in front of the loading dock (2).

14. The method as claimed in claim 13, **characterized in that** the step of fixing the transport vehicle (1) comprises fixing an inbuilt brake (43) of the pulling tool (4) or applying a holding means or linking means (49) to the pulling tool (4).

15. The method as claimed in claim 13 or 14, further comprising the steps of
- releasing the fixed transport vehicle (1), and
- removing the coupler (3) from the suitable component (11) of the transport vehicle (1).
